# EUROPEAN PATENT SPECIFICATION

(11) **EP 4 034 827 B1**
(45) Date of publication and mention of the grant of the patent: **25.11.2026**
(21) Application number: 20797581.4
(22) Date of filing: 24.09.2020
(51) Int. Cl.: F28D 21/00, B01D 1/30, F25B 39/02, F28F 9/00, F28F 19/01

(54) **LIQUID BLOCKING DEVICE AND EVAPORATOR THEREOF**
FLÜSSIGKEITSSPERRVORRICHTUNG UND DEREN VERDAMPFER
DISPOSITIF DE BLOCAGE DES LIQUIDES ET SON ÉVAPORATEUR

(30) Priority: 27.09.2019 CN 201910923069
(43) Date of publication of application: 03.08.2022
(73) Proprietor: Carrier Corporation, Palm Beach Gardens, FL 33418 (US)
(72) Inventor: XIANG, Liang, Shanghai, 201206 (CN); WANG, Xin, Shanghai, 201206 (CN)
(74) Representative: Dehns
(86) International application number: PCT/US2020/052366
(87) International publication number: WO 2021/061889

(56) References cited:
- WO-A1-2012/107645
- WO-A1-2019/116072
- CN-B- 104 848 605

## Description

The present invention belongs to the field of refrigeration devices, and specifically relates to a liquid blocking device for an evaporator and an evaporator having the liquid blocking device.

A refrigerant gas resulting from evaporation in an evaporator, especially in a flooded evaporator, entrains some liquid droplets. If this portion of liquid droplets enters a compressor, it will cause harm to the compressor. Therefore, a liquid blocking device such as a baffle is provided at a suction port of the evaporator to intercept liquid in the gas. When the gas passes through the baffle, it may change its path, and at the same time it collides with the baffle. The liquid droplets are attached to the baffle, gather into large liquid droplets during a descending process along the baffle, and finally fall down under the gravity. The filtered gas leaves the evaporator from the suction port.

Providing the baffle is one of the effective ways to alleviate the above problems, but more designs focus on the change of the baffle itself, and tend to use expensive designs to reduce a liquid entrainment rate.

WO 2019/116072 A1 discloses a baffle for an evaporator of a refrigeration circuit, said baffle being adapted to be placed in an internal volume of a shell of the evaporator to form a barrier against a refrigerant fluid flow towards a suction pipe of the evaporator, the baffle comprising at least one perforated area and at least one non-perforated area.

CN 104848605 B discloses a perforated plate gas equalizer including a horizontal plate and two arc plates. The horizontal plate is provided with a plurality of through holes, and a liquid-equalizing plate is horizontally arranged below a heat exchange tube bundle.

WO 2012/107645 A1 discloses a device for separating droplets comprising a gravitational droplet separator which is arranged inside an outer casing and one or more filler units arranged between the outer casing and a plate pack for decreasing the liquid volume of the substance to be vaporized inside the outer casing.

An aspect of the present application is to provide a liquid blocking device for an evaporator, which has an improved liquid blocking effect.

According to a first aspect of the invention, a liquid blocking device for an evaporator is provided, the liquid blocking device including:
a body, which has a plate-shaped first separator extending in a longitudinal direction, the first separator having a plurality of holes, and the plurality of holes communicating an exterior of the body with an interior of the body; and
a second separator attached to the body, the second separator being configured to have a plurality of openings which abut each other, so that a pressure drop generated when a fluid passes through the second separator via the openings is less than a pressure drop generated when the fluid passes through the first separator, wherein: the second separator is disposed on the exterior of the body, so that the fluid passes through the second separator and then passes through the first separator; or the second separator is disposed in the interior of the body, so that the fluid passing through the first separator passes through the second separator.

The plurality of openings may be distributed throughout the second separator.

The second separator may be formed into a mesh shape.

The second separator may be a wire mesh made of metal.

The first separator and the second separator may be integrated together, or the first separator and the second separator may be provided separately.

The second separator may be composed of at least one section, and the at least one section may be configured to surround the body in a circumferential direction.

The body may have a bottom portion and two opposite side portions, and the bottom portion may be configured to have a solid plate shape to prevent fluid from entering the interior from the exterior of the body; the combined first separator and second separator may be disposed on the side portions.

The plurality of holes of the first separator may be divided into at least a first hole area, a second hole area, and a third hole area; wherein each of the first hole area, the second hole area and the third hole area may have a hole array, and the plurality of openings of the second separator may overlap with at least one of the hole arrays.

The liquid blocking device of the present application realizes multiple times of separation by providing multiple separators. As compared with the one-time separation of existing liquid blocking devices, the present invention may increase the gas-liquid separation effect. The newly added second separator is a separator that is different from the first separator. After traditional separation, a pressure drop of refrigerant will be generated, whereas in the present invention, the refrigerant may generate a small or even nearly zero pressure drop after passing through the second separator. Therefore, it will not affect the pressure of the vapor portion of the refrigerant.

The second separator may be shaped to have a mesh structure, such as a wire mesh, which is easy to implement.

The second separator may be added to the existing liquid blocking devices. Through various known attachment techniques, the second separator may be attached to the liquid blocking device, especially the liquid blocking device with a perforated plate.

As compared with the liquid blocking device with only one-time separation, the present invention may further alleviate the liquid entrainment phenomenon in the evaporator without excessively increasing the pressure drop of the refrigerant gas. The present invention may make the design of the evaporator more compact and effective.

According to another aspect of the invention an evaporator is provided, which includes:
an evaporator body;
an inlet, via which a refrigerant enters the inside of the evaporator body; and
an outlet, wherein the refrigerant exits from the inside of the evaporator body via the outlet; the evaporator further includes:
   the liquid blocking device of the first aspect, which is provided at the outlet, wherein optionally, the liquid blocking device is provided with any optional features thereof.

In the present application, the liquid blocking device may reduce the liquid entrainment rate of the refrigerant, and therefore may further reduce the liquid-entrained portion of the refrigerant that enters the compressor, thereby improving the working efficiency of the compressor, and thereby improving the heat exchange performance of the entire refrigeration circuit.

Through the following detailed description with reference to the accompanying drawings, other aspects and features of the present application will become apparent. However, it should be understood that the drawings are only designed for the purpose of explanation, not intended to limit the scope of the claims. It should also be understood that the drawings are only intended to conceptually illustrate the structures and processes described herein, and the drawings are not necessarily drawn to scale, unless otherwise indicated.

The present invention will be more fully understood with reference to the detailed description of the following exemplary embodiments in conjunction with the accompanying drawings, wherein:
FIG. 1 shows a block diagram of a refrigeration circuit ;
FIG. 2 shows a schematic diagram of an evaporator ;
FIG. 3 shows a schematic diagram of a liquid blocking device ;
FIG. 4 shows a schematic diagram of a part of a first separator of the liquid blocking device in FIG. 3;
FIG. 5 shows a schematic diagram of a part of a body of the liquid blocking device in FIG. 3;
FIG. 6 shows a schematic diagram of the liquid blocking device ;
FIG. 7 shows a schematic diagram of the liquid blocking device ; and
FIG. 8 shows a schematic diagram of the liquid blocking device .

In order to help those skilled in the art accurately understand the subject matter claimed in the present application, specific embodiments of the present invention will be described in detail below with reference to the accompanying drawings. In the same or different drawings, the same or similar components are represented by the same or similar reference signs.

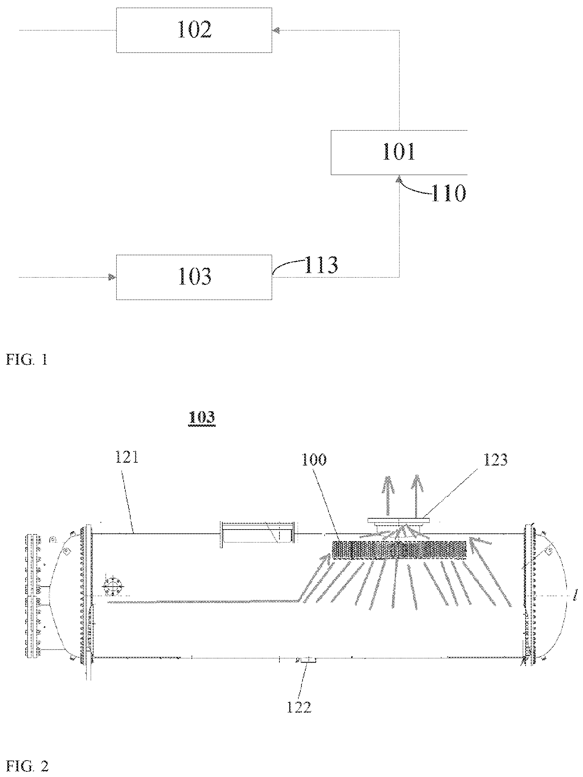

The liquid blocking device involved in the present application is used in refrigeration devices such as evaporators, particularly flooded evaporators in which liquid entrainment occurs. In a refrigeration circuit shown in FIG. 1, a compressor 101 is configured to receive a refrigerant from an evaporator 103 and discharge the refrigerant to a condenser 102. The condenser 102 then discharges the refrigerant to the evaporator 103, and the evaporator 103 receives the refrigerant and finally circulates the refrigerant to the compressor 101. An inlet 110 of the compressor 101 is connected to an outlet 113 of the evaporator 103 via a pipeline, and the refrigerant from the evaporator 103 is drawn into the compressor 101 by suction. The liquid blocking device of the present application is provided at the outlet 113 of the evaporator 103, and the refrigerant gas inside of the evaporator 103 passes through the liquid blocking device before passing through the outlet. Liquid droplets in the refrigerant gas are intercepted when passing through the liquid blocking device, thereby allowing the refrigerant gas to enter the outlet and then flow into the compressor.

FIG. 2 shows a schematic diagram of an embodiment of an evaporator involved in the present application. The evaporator 103 includes a housing 121, which divides the evaporator into an inside and an outside. The evaporator 103 also includes an inlet 122 at the bottom and a suction port or outlet 123 at the top, and a liquid blocking device 100 is disposed below the outlet 123. It can be seen from the figure that the refrigerant flows toward the outlet 123 in the directions of the arrows inside the evaporator, and passes through the liquid blocking device 100 before entering the outlet 123, so that liquid droplets in the refrigerant gas are blocked at the outlet 123. The liquid blocking device may be connected to the housing 121 of the evaporator by welding or other conceivable methods.

The liquid blocking device of the present application includes a body having a first separator extending in a longitudinal direction for the refrigerant to pass through. The first separator is a plate-shaped structure having a plurality of holes disposed therein. These holes extend from the exterior to the interior of the body so that the outside and the inside of the body communicate with each other. When the refrigerant passes through the first separator via the holes, a pressure drop is generated.

The liquid blocking device of the present application also includes a second separator. The second separator is a separator different from the first separator. The second separator includes a plurality of openings, and the refrigerant passes through the second separator via these openings. When the refrigerant passes through the second separator, another pressure drop lower than that when the refrigerant passes through the first separator is generated.

In the present application, two different interceptions are used to improve the efficiency of liquid blocking. When the refrigerant passes through the second separator, a pressure drop that is lower than or even much lower than that when the refrigerant passes through the first separator can be generated. When the refrigerant passes through the second separator, a nearly zero pressure drop can be generated.

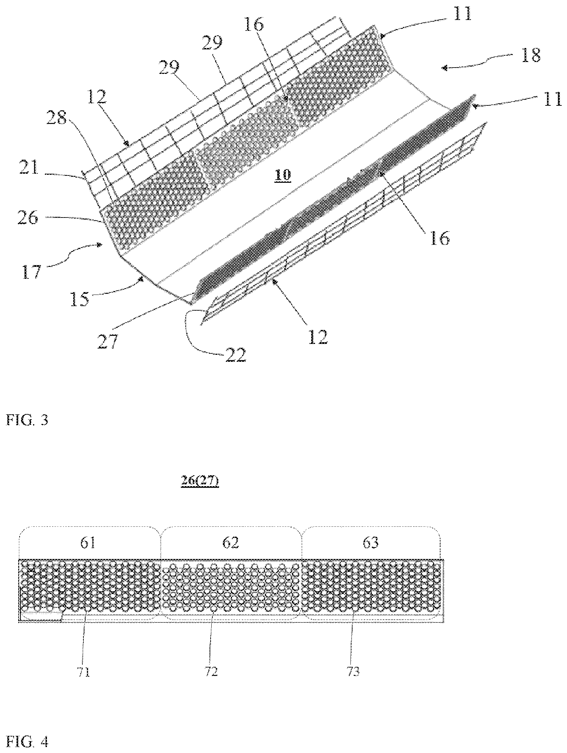

FIG. 3 shows a schematic diagram of a first embodiment of the liquid blocking device involved in the present application. The liquid blocking device includes a body 10 including a bottom portion 15, a front portion 17 and a rear portion 18, and two opposite side portions 16 between the front portion 17 and the rear portion 18. The side portions 16 are connected to the bottom portion 15. The front portion 17 and the rear portion 18 are open. The bottom portion 15 and the two opposite side portions 16 define the interior of the body 10, and when the liquid blocking device is installed with the evaporator, the interior communicates with the outlet of the evaporator. The body has a first separator 11 extending in a longitudinal direction. Herein, the longitudinal direction is also the length/axial extension direction of the evaporator (*l*, see FIG. 2). The positions of the front portion 17 and the rear portion 18 are in the longitudinal direction and can be interchanged. The first separator 11 has a plate shape. The first separator 11 includes a first plate 26 and a second plate 27 respectively provided on the two opposite side portions 16. A plurality of holes 28 are provided on the first plate 26 and the second plate 27 respectively. These holes 28 extend from the exterior of the body 10 to the interior of the body 10 in the plates to communicate the exterior with the interior of the body 10 so that the refrigerant flows from the exterior to the interior via the holes.

In the embodiment shown in FIG. 3, the first plate 26 and the second plate 27 are disposed on the two opposite side portions 16. The holes 28 of the first plate 26 and the second plate 27 are arranged symmetrically, and as shown in FIG. 4, these holes are divided into a first hole area 61, a second hole area 62 and a third hole area 63. In FIG. 4, the first hole area 61, the second hole area 62, and the third hole area 63 are shown in dashed lines. A hole array 71, 72 and 73 formed by a plurality of the holes arranged in an orderly manner is disposed in each hole area. The refrigerant will flow from the exterior of the body into the interior of the body through these holes.

The number of hole areas may be modified according to the design, and may be greater than three or less than three. Similarly, the number of holes in the first plate 26 and the second plate 27 may also depend on the design. In addition, the holes of the first plate 26 and the second plate 27 are not limited to the symmetrical arrangement as shown in the figure, and may also be staggered. The shape of the hole is a circle in the figure, and may also be other shapes, including but not limited to, an ellipse, a semicircle, a polygon, a rhombus, a rectangle, etc.

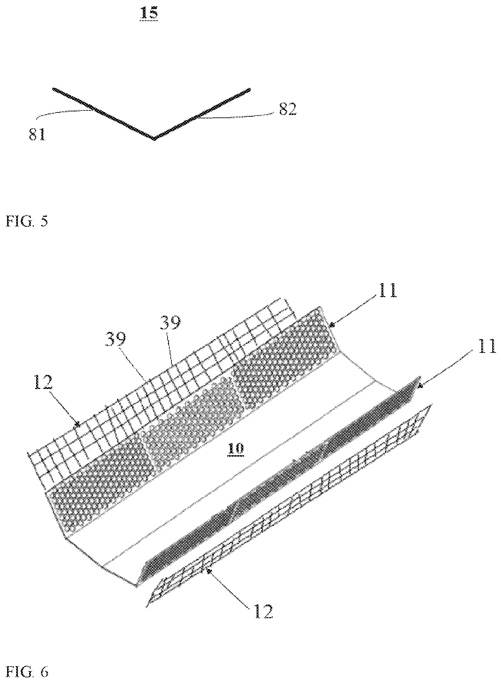

As shown in FIG. 5, the bottom portion 15 shown in the figure includes a first folded plate 81 and a second folded plate 82, and the first folded plate 81 and the second folded plate 82 form a V shape. It is conceivable that the bottom portion 15 may also have other shapes, including but not limited to, plate-shaped plane, curved surface with a curvature, etc.

The liquid blocking device of the present application further includes a second separator 12. In FIG. 3, for clarity of illustration, the liquid blocking device is shown as an exploded view, and the second separator 12 is separated from the first separator 11 by a certain distance. In fact, the second separator 12 is attached to the body 10, that is, in the illustrated embodiment, the second separator 12 is attached to the first separator 11. The second separator 12 is shaped into a mesh structure. The second separator 12 includes a plurality of openings 29 which abut each other to form voids of the mesh structure. Unlike the holes of the first separator 11, there is a border between any openings 29 of the second separator 12, which defines the openings, and there are no other physical features. For example, without limitation, two adjacent openings 29 only have a border therebetween and they share the border. Therefore, there is almost no obstacle when the refrigerant passes through the openings of the second separator 12, resulting in a very small, even nearly zero, pressure drop. In contrast, when the refrigerant passes through the first separator 11, a certain pressure drop is generated due to various factors such as the thickness of the plate, the density of the holes, and the arrangement of the hole areas.

The plurality of openings 29 are distributed throughout the second separator 12, so that the second separator 12 may have a mesh structure in this entirety as shown in FIG. 3.

After the refrigerant passes through the second separator 12 and the first separator 11, the liquid therein is intercepted by the openings 29 and the holes 28, and the remaining refrigerant gas after gas-liquid separation is the desired gaseous refrigerant to be compressed.

The second separator 12 includes a first wire mesh 21 and a second wire mesh 22 disposed on the two opposite side portions 16 and corresponding to the first plate 26 and the second plate 27, respectively. The first wire mesh 21 and the second wire mesh 22 are connected to the first plate 26 and the second plate 27 on the exterior of the body by welding. The openings 29 overlap with the holes 28 so that the refrigerant passes through the second separator 12 via the openings 29 and then passes through the first separator 11 via the holes 28.

Since the bottom portion 15 is a solid plate, the refrigerant is prevented from passing through the liquid blocking device from the bottom portion 15. The first separator 11 and the second separator 12 also play a role of flow diversion, guiding the refrigerant from the exterior to the interior of the body via the side portions 16, and completing the gas-liquid separation.

The first wire mesh 21 and the second wire mesh 22 are made of metal, such as a wire mesh, and are therefore easy to implement. The first plate 26 and the second plate 27 are perforated plates made of metal. During the manufacturing, the body 10 with the perforated plates may be integrally formed first, and then iron wire meshes may be welded on the two side portions 16 to obtain the liquid blocking device of the present application.

In the illustrated embodiment, the first separator 11 has a denser hole arrangement. It is conceivable that the first separator 11 may also have a relatively sparse hole arrangement, and may be combined with the second separator 12 in the figure to form a two-time separation. For any liquid blocking device with perforated plates, the wire meshes of the present application as shown in the figure may be arranged outside the perforated plates to enhance the gas-liquid separation effect.

In the illustrated embodiment, the area of the second separator 12, namely the first wire mesh 21 and the second wire mesh 22, is substantially the same as the area of the first plate 26 and the second plate 27. It is conceivable that the first wire mesh 21 and the second wire mesh 22 can be made smaller to combine with the partial first plate 26 and the second plate 27 to form a two-time separation. The shapes of the first wire mesh 21 and the second wire mesh 22 may be the same rectangular shape as the first plate 26 and the second plate 27, or may be other shapes; the first wire mesh 21 and the second wire mesh 22 may be of a planar shape, or may also be of a three-dimensional shape.

FIG. 6 shows a schematic diagram of a second embodiment of the liquid blocking device involved in the present application. In this embodiment, the body 10 is basically the same as the body in FIG. 3. For the clarity of illustration, the second separator 12 is spaced apart from the first separator 11, so that the disassembled liquid blocking device is shown. The second separator 12 has a mesh structure and has more openings 39 than the second separator in FIG. 3; that is, the density of the openings 39 of the second separator 12 is greater than that of the second separator in FIG. 3. In the illustrated embodiment, the refrigerant passes through the second separator 12 and then enters the first separator 11. Since the openings 39 of the second separator 12 abut each other, the refrigerant has a small pressure drop when passing through the second separator 12, and at the same time, the liquid is intercepted by the voids of the mesh structure, thereby being separated from the gas.

The density of the openings 39 of the second separator 12 may be designed to be smaller. The shape of the opening 39 is not limited to the rectangular shape as shown in the figure, and may also be other shapes, including but not limited to a circle, a semicircle, an ellipse, a rhombus, a polygon, and the like. The diameter of the opening 39 may be designed to be larger than, equal to, or smaller than the diameter of the hole, and in each case, the refrigerant will pass through with a pressure drop close to zero.

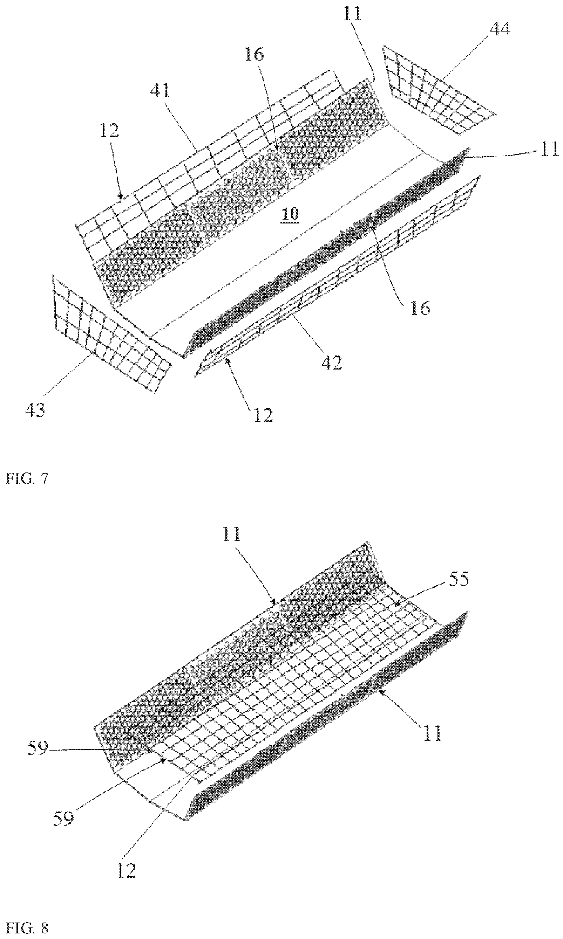

FIG. 7 shows a schematic diagram of a third embodiment of the liquid blocking device involved in the present application. In this embodiment, the body 10 is basically the same as the body in FIG. 2. For the clarity of illustration, the second separator 12 is spaced apart from the first separator 11, so that the disassembled liquid blocking device is shown. The second separator 12 includes a first wire mesh 41, a second wire mesh 42, a third wire mesh 43, and a fourth wire mesh 44. The first wire mesh 41 and the second wire mesh 42 are the same as those in FIGS. 3-6, and are disposed on two opposite side portions 16 of the body 10. The third wire mesh 43 and the fourth wire mesh 44 are respectively disposed on the front portion and rear portion of the body, whereby the first wire mesh 41, the second wire mesh 42, the third wire mesh 43 and the fourth wire mesh 44 surround the body 10 in a circumferential direction. The advantage of this arrangement is that the second separator 12 is divided into multiple sections; on one hand, the third wire mesh 43 and the fourth wire mesh 44 will not affect the flow of refrigerant, and the refrigerant has a nearly zero pressure drop when passing through the third wire mesh 43 and the fourth wire mesh 44; on the other hand, when the refrigerant passes through the third wire mesh 43 and the fourth wire mesh 44, gas-liquid separation occurs. This design can be adopted in a case where the longitudinal length of the liquid blocking device is long or short.

Of course, the body of the liquid blocking device may also be provided with perforated plates with the same separation principle as the first plate 26 and the second plate 27 on the front portion and rear portion, and a third wire mesh 43 and a fourth wire mesh 44 may be added on the basis of perforated plates.

In the illustrated embodiment, the first wire mesh 41, the second wire mesh 42, the third wire mesh 43 and the fourth wire mesh 44 are separated. It is conceivable that these wire meshes may also be integrated together and surround the body.

The first separator 11 and the second separator 12 may be integrated together, such as being connected by welding or by other known attachment techniques to form a multilayer combined separator as described above. It is conceivable that the first separator 11 and the second separator 12 may also be separately disposed on the body 10.

In the foregoing embodiment, the second separator 12 is disposed outside the first separator 11, so the refrigerant first passes through the second separator 12 for the first separation, and then passes through the first separator 11 for the second separation. It is conceivable that the order of separations is not limited to the above. The refrigerant may also be separated by the first separator 11 for the first time, and then separated by the second separator 12 for the second time. For example, without limitation, in the embodiments shown in FIGS. 3-7, the second separator 12 may be welded to the first separator 11 inside the body, or may be disposed separately from the first separator 11 in the body.

FIG. 8 shows a schematic diagram of a fourth embodiment of the liquid blocking device involved in the present application. In this embodiment, the body is basically the same as the body in FIG. 3. The second separator is disposed inside the body. The second separator 12 is shaped to have a mesh structure and is laid flat. The mesh structure includes a plurality of openings 59 abut each other. The second separator 12 is spaced by a certain distance apart from the bottom portion of the body. The refrigerant first passes through the first separator 11 via the holes for the first separation, then enters the interior of the body, and then passes through the second separator 12 via the openings for the second separation. In the illustrated embodiment, the second separator 12 is a fifth wire mesh 55 and is rectangular. It is conceivable that the second separator 12 may also be disposed close to the outlet of the evaporator, such as surrounding the outlet, so that the refrigerant is subject to gas-liquid separation again when it is about to leave the outlet. In the illustrated embodiment, the second separator 12 may be attached to the body by welding.

When the refrigerant passes through the liquid blocking device of the present application, gas-liquid separation occurs at least twice, and an ideal separation effect can be achieved.

While the specific embodiments of the present invention have been shown and described in detail to illustrate the principles of the present invention, it should be understood that the present invention can be implemented in other ways without departing from the scope of the claims.

## Claims

1. A liquid blocking device for an evaporator, comprising:
a body (10), which has a plate-shaped first separator (11) extending in a longitudinal direction, the first separator (11) having a plurality of holes (28), and the plurality of holes (28) communicating an exterior of the body (10) with an interior of the body (10); **characterized in that** the liquid blocking device further comprises:
a second separator (12) attached to the body (10), the second separator (12) being configured to have a plurality of openings (29) which abut each other, so that a pressure drop generated when a fluid passes through the second separator (12) via the openings (29) is less than a pressure drop generated when the fluid passes through the first separator (12),
wherein:
the second separator (12) is disposed on the exterior of the body (10), so that the fluid passes through the second separator (12) and then passes through the first separator (11); or
the second separator (12) is disposed in the interior of the body (10), so that the fluid passing through the first separator (11) passes through the second separator (12).

2. The liquid blocking device according to claim 1, wherein the plurality of openings (29) are distributed throughout the second separator (12).

3. The liquid blocking device according to claim 1 or 2, wherein the second separator (12) is formed into a mesh shape.

4. The liquid blocking device according to claim 3, wherein the second separator (12) is a wire mesh made of metal.

5. The liquid blocking device according to claim 1 or 2, wherein the first separator (11) and the second separator (12) are integrated together, or the first separator (11) and the second separator (12) are provided separately.

6. The liquid blocking device according to claim 1 or 2, wherein the second separator (12) is composed of at least one section, and the at least one section is configured to surround the body (10) in a circumferential direction.

7. The liquid blocking device according to claim 1 or 2, wherein the body (10) has a bottom portion (15) and two opposite side portions (16), and the bottom portion (15) is configured to have a solid plate shape to prevent fluid from entering the interior from the exterior of the body (10); the combined first separator (11) and second separator (12) are disposed on the side portions (16).

8. The liquid blocking device according to claim 1 or 2, wherein the plurality of holes (28) of the first separator (11) are divided into at least a first hole area (61), a second hole area (62), and a third hole area (63); and wherein each of the first hole area (61), the second hole area (62) and the third hole area (63) has a hole array (71, 72, 73), and the plurality of openings (29) of the second separator (12) overlap with at least one of the hole arrays (71, 72, 73).

9. An evaporator, comprising:
an evaporator body;
an inlet (122), via which a refrigerant enters the inside of the evaporator body; and
an outlet (123), wherein the refrigerant exits from the inside of the evaporator body via the outlet (123);
wherein the evaporator further comprises:
the liquid blocking device according to any one of claims 1 to 8, which is provided at the outlet (123).

## Patentansprüche

1. Flüssigkeitssperrvorrichtung für einen Verdampfer, umfassend:
einen Körper (10), der ein plattenförmiges erstes Trennelement (11), das sich in einer Längsrichtung erstreckt, aufweist, wobei das erste Trennelement (11) eine Vielzahl von Löchern (28) aufweist und die Vielzahl von Löchern (28) ein Äußeres des Körpers (10) mit einem Inneren des Körpers (10) verbinden;
**dadurch gekennzeichnet, dass** die Flüssigkeitssperrvorrichtung ferner umfasst:
ein zweites Trennelement (12), das an dem Körper (10) befestigt ist, wobei das zweite Trennelement (12) ausgelegt ist, um eine Vielzahl von Öffnungen (29), die aneinandergrenzen, aufzuweisen, so dass ein Druckabfall, der erzeugt wird, wenn ein Fluid über die Öffnungen (29) durch das zweite Trennelement (12) strömt, weniger als ein Druckabfall, der erzeugt wird, wenn das Fluid durch das erste Trennelement (12) strömt, ist,
wobei:
das zweite Trennelement (12) an dem Äußeren des Körpers (10) angeordnet ist, so dass das Fluid durch das zweite Trennelement (12) strömt und dann durch das erste Trennelement (11) strömt; oder
das zweite Trennelement (12) in dem Inneren des Körpers (10) angeordnet ist, so dass das Fluid, das durch das erste Trennelement (11) strömt, durch das zweite Trennelement (12) strömt.

2. Flüssigkeitssperrvorrichtung nach Anspruch 1, wobei die Vielzahl von Öffnungen (29) über das zweite Trennelement (12) hinweg verteilt sind.

3. Flüssigkeitssperrvorrichtung nach Anspruch 1 oder 2, wobei das zweite Trennelement (12) zu einer Netzform ausgebildet ist.

4. Flüssigkeitssperrvorrichtung nach Anspruch 3, wobei das zweite Trennelement (12) ein aus Metall hergestelltes Drahtnetz ist.

5. Flüssigkeitssperrvorrichtung nach Anspruch 1 oder 2, wobei das erste Trennelement (11) und das zweite Trennelement (12) miteinander integriert sind oder das erste Trennelement (11) und das zweite Trennelement (12) separat bereitgestellt sind.

6. Flüssigkeitssperrvorrichtung nach Anspruch 1 oder 2, wobei das zweite Trennelement (12) aus mindestens einem Teilabschnitt zusammengesetzt ist und der mindestens eine Teilabschnitt ausgelegt ist, um den Körper (10) in einer Umfangsrichtung zu umgeben.

7. Flüssigkeitssperrvorrichtung nach Anspruch 1 oder 2, wobei der Körper (10) einen unteren Abschnitt (15) und zwei einander gegenüberliegende Seitenabschnitte (16) aufweist und der untere Abschnitt (15) ausgelegt ist, um eine massive Plattenform aufzuweisen, um zu verhindern, dass Fluid von dem Äußeren des Körpers (10) in das Innere eintritt; wobei das erste Trennelement (11) und das zweite Trennelement (12) in Kombination an den Seitenabschnitten (16) angeordnet sind.

8. Flüssigkeitssperrvorrichtung nach Anspruch 1 oder 2, wobei die Vielzahl von Löchern (28) des ersten Trennelements (11) in mindestens einen ersten Lochbereich (61), einen zweiten Lochbereich (62) und einen dritten Lochbereich (63) unterteilt sind; und wobei jeder von dem ersten Lochbereich (61), dem zweiten Lochbereich (62) und dem dritten Lochbereich (63) eine Lochanordnung (71, 72, 73) aufweist und die Vielzahl von Öffnungen (29) des zweiten Trennelements (12) mit mindestens einer der Lochanordnungen (71, 72, 73) überlappen.

9. Verdampfer, umfassend:
einen Verdampferkörper;
einen Einlass (122), über den ein Kältemittel in den Innenraum des Verdampferkörpers eintritt; und
einen Auslass (123), wobei das Kältemittel über den Auslass (123) aus dem Innenraum des Verdampferkörpers austritt;
wobei der Verdampfer ferner umfasst:
die Flüssigkeitssperrvorrichtung nach einem der Ansprüche 1 bis 8, die an dem Auslass (123) bereitgestellt ist.

## Revendications

1. Dispositif de blocage des liquides pour un évaporateur, comprenant :
un corps (10), qui a un premier séparateur (11) en forme de plaque s'étendant dans une direction longitudinale, le premier séparateur (11) ayant une pluralité de trous (28), et la pluralité de trous (28) faisant communiquer un extérieur du corps (10) avec un intérieur du corps (10) ;
**caractérisé en ce que** le dispositif de blocage des liquides comprend en outre :
un second séparateur (12) fixé au corps (10), le second séparateur (12) étant conçu pour avoir une pluralité d'ouvertures (29) qui viennent en butée les unes contre les autres, de sorte qu'une chute de pression générée lorsqu'un fluide traverse le second séparateur (12) par l'intermédiaire des ouvertures (29) est inférieure à une chute de pression générée lorsque le fluide traverse le premier séparateur (12),
dans lequel :
le second séparateur (12) est disposé sur l'extérieur du corps (10), de sorte que le fluide traverse le second séparateur (12) puis traverse le premier séparateur (11) ; ou
le second séparateur (12) est disposé dans l'intérieur du corps (10), de sorte que le fluide traversant le premier séparateur (11) traverse le second séparateur (12).

2. Dispositif de blocage des liquides selon la revendication 1, dans lequel la pluralité d'ouvertures (29) sont réparties dans le second séparateur (12).

3. Dispositif de blocage des liquides selon la revendication 1 ou 2, dans lequel le second séparateur (12) est formé en forme de maille.

4. Dispositif de blocage des liquides selon la revendication 3, dans lequel le second séparateur (12) est un treillis constitué de métal.

5. Dispositif de blocage des liquides selon la revendication 1 ou 2, dans lequel le premier séparateur (11) et le second séparateur (12) sont intégrés ensemble, ou le premier séparateur (11) et le second séparateur (12) sont fournis séparément.

6. Dispositif de blocage des liquides selon la revendication 1 ou 2, dans lequel le second séparateur (12) est composé d'au moins une section, et l'au moins une section est configurée pour entourer le corps (10) dans une direction circonférentielle.

7. Dispositif de blocage des liquides selon la revendication 1 ou 2, dans lequel le corps (10) a une partie inférieure (15) et deux parties latérales (16) opposées, et la partie inférieure (15) est conçue pour avoir une forme de plaque solide afin d'empêcher le fluide de pénétrer à l'intérieur depuis l'extérieur du corps (10) ; le premier séparateur (11) et le second séparateur (12) combinés sont disposés sur les parties latérales (16).

8. Dispositif de blocage des liquides selon la revendication 1 ou 2, dans lequel la pluralité de trous (28) du premier séparateur (11) est divisée en au moins une première zone de trous (61), une deuxième zone de trous (62) et une troisième zone de trous (63) ; et dans lequel chacune des première zone de trous (61), deuxième zone de trous (62) et troisième zone de trous (63) a un réseau de trous (71, 72, 73), et la pluralité d'ouvertures (29) du second séparateur (12) chevauchent au moins un des réseaux de trous (71, 72, 73).

9. Évaporateur, comprenant :
un corps d'évaporateur ;
une entrée (122) par l'intermédiaire de laquelle un fluide frigorigène entre à l'intérieur du corps d'évaporateur ; et
une sortie (123), dans lequel le fluide frigorigène sort de l'intérieur du corps d'évaporateur par l'intermédiaire de la sortie (123) ;
dans lequel l'évaporateur comprend en outre :
le dispositif de blocage des liquides selon l'une quelconque des revendications 1 à 8, qui est fourni au niveau de la sortie (123).
